# FASCICULE DE BREVET EUROPEEN

(11) **EP 3 310 615 B1**
(45) Date de publication et mention de la délivrance du brevet: **19.09.2018**
(21) Numéro de dépôt: 17771805.3
(22) Date de dépôt: 30.08.2017
(51) Int. Cl.: B60P 3/00, G06Q 10/08, G07C 9/00

(54) **VÉHICULE SANS PILOTE, ET PROCÉDÉ DE DÉVEROUILLAGE SIMULTANÉ D'AU MOINS DEUX OUVRANTS D'UN TEL VÉHICULE**
UNBEMANNTES FAHRZEUG UND VERFAHREN ZUM GLEICHZEITIGEN ENTRIEGELN MINDESTENS ZWEIER KLAPPEN EINES SOLCHEN FAHRZEUGS
UNMANNED VEHICLE AND METHOD FOR SIMULTANEOUSLY UNLOCKING AT LEAST TWO FLAPS OF SUCH A VEHICLE

(30) Priorité: 01.09.2016 FR 1658146
(43) Date de publication de la demande: 25.04.2018
(73) Titulaire: LA POSTE, 75015 Paris (FR)
(72) Inventeur: FABRE, Jean-Paul, 75014 Paris (FR)
(74) Mandataire: Novagraaf Technologies
(86) Numéro de dépôt international: PCT/FR2017/052311
(87) Numéro de publication internationale: WO 2018/042130

(56) Documents cités:
- EP-B1- 2 397 051
- WO-A1-2016/042232
- DE-A1- 10 164 574
- US-A- 1 130 464
- US-A1- 2008 116 746
- US-B1- 9 256 852

## Description

### DOMAINE TECHNIQUE DE L'INVENTION

La présente invention concerne de manière générale le domaine des véhicules sans pilote. Elle vise en particulier un véhicule sans pilote du type comprenant au moins un compartiment de réception d'un objet, et au moins un ouvrant formant accès à ce compartiment depuis l'extérieur du véhicule. La présente invention vise également un procédé de déverrouillage simultané d'au moins deux ouvrants d'un tel véhicule sans pilote.

De tels véhicules sans pilote peuvent être entièrement autonomes ou être pilotés à distance par voie radioélectrique. Des véhicules de ce type trouvent par exemple leur application dans les domaines de la logistique et de la livraison d'objets, notamment pour pouvoir répondre à la problématique de la livraison « sur le dernier kilomètre » à moindre coût.

### ETAT DE LA TECHNIQUE ANTERIEURE

Il est connu un véhicule sans pilote comportant un compartiment de réception d'un objet et un ouvrant formant accès au compartiment depuis l'extérieur du véhicule (voir US9256852B1). Le véhicule comporte en outre un dispositif de déverrouillage de l'ouvrant. Le dispositif de déverrouillage comprend notamment des moyens d'acquisition de données permettant par exemple la saisie d'un code alphanumérique par un utilisateur pour provoquer le déverrouillage de l'ouvrant. Une problématique rencontrée dans de tels dispositifs, outre l'aspect contraignant de la saisie manuelle du code, est celle du vol possible du code par une personne mal intentionnée.

Une solution connue pour pallier en partie l'inconvénient précité est proposée par des véhicules sans pilote permettant de sécuriser l'accès au compartiment à partir d'une clef numérique transmise par un téléphone portable.

Un tel véhicule sans pilote comporte, outre le compartiment de réception de l'objet, un ouvrant formant accès au compartiment depuis l'extérieur du véhicule. Le véhicule comporte également un dispositif de déverrouillage de l'ouvrant, qui comprend une serrure électronique et un module de commande relié à la serrure électronique via une liaison de données.

La serrure électronique comprend des moyens moteurs aptes à verrouiller et déverrouiller l'ouvrant suivant la valeur d'une consigne reçue via la liaison de données. Le module de commande comprend un capteur d'un signal et un composant électronique de reconnaissance permettant d'authentifier une clef numérique. Le composant électronique de reconnaissance est relié à la serrure électronique via la liaison de données et est apte à authentifier une clef numérique reçue par le capteur de signal, et transmise à partir du téléphone portable. Pour ce faire, le module de commande comprend en outre une mémoire stockant une liste de clefs numériques prédéterminées autorisant le déverrouillage de l'ouvrant. Une fois la clef numérique authentifiée par le composant électronique de reconnaissance, ce dernier génère sur la liaison de données un signal de consigne de désactivation des moyens moteurs de la serrure électronique, pour le déverrouillage de l'ouvrant.

Toutefois, la sécurité relative au déverrouillage de l'ouvrant dans un tel véhicule sans pilote peut être compromise si un utilisateur non autorisé utilise une ou plusieurs clefs numériques ayant déjà servies et appartenant à la liste de clefs numériques prédéterminées. En outre, un tel dispositif de déverrouillage impose une maintenance relativement complexe et coûteuse au sein du véhicule, notamment pour mettre à jour à tout instant, dans la mémoire du module de commande, la liste des clefs numériques « valables ».

### EXPOSE DE L'INVENTION

L'invention décrite par la suite vise à remédier à tout ou partie des inconvénients de l'état de la technique et notamment à proposer un véhicule sans pilote comprenant au moins un compartiment de réception d'un objet, et au moins un ouvrant formant accès à ce compartiment depuis l'extérieur du véhicule, permettant d'assurer de manière simple et fiable la fermeture et le déverrouillage de l'ouvrant, tout en améliorant le niveau de sécurité lié au déverrouillage.

A cet effet, l'invention a pour objet, selon un premier aspect, un véhicule sans pilote selon la revendication 1. Ce véhicule comprend:
- au moins un compartiment définissant un espace intérieur de réception d'un objet ;
- au moins un ouvrant formant accès audit compartiment depuis l'extérieur du véhicule, ledit ouvrant étant apte à fermer ledit espace intérieur ; et
- un dispositif de déverrouillage du ou de chaque ouvrant, le dispositif comprenant au moins une serrure électronique et un module de commande relié à la serrure électronique via une liaison de données, la serrure électronique comprenant des moyens moteurs aptes à verrouiller et déverrouiller l'ouvrant suivant la valeur d'une consigne reçue via la liaison de données, le module de commande comprenant un capteur d'un signal comprenant une clef numérique et un composant électronique de reconnaissance permettant d'authentifier la clef numérique, le capteur étant propre à transmettre le signal au composant électronique de reconnaissance, ledit composant étant relié à la liaison de données et étant alimenté par des moyens d'alimentation électrique, l'authentification de la clef numérique par le composant électronique générant un signal de consigne de désactivation des moyens moteurs pour le déverrouillage de l'ouvrant,
dans lequel la serrure électronique comprend des moyens de détection d'une fermeture de l'ouvrant aptes à émettre un signal de détection de fermeture sur la liaison de données, et le module de commande comprend en outre des moyens d'émission d'un signal et des moyens de génération de clefs numériques reliés aux moyens d'alimentation électrique, au composant électronique et aux moyens d'émission, les moyens de génération étant propres à générer une clef numérique unique à chaque fermeture de l'ouvrant, le signal émis comportant la clef numérique unique générée, le composant électronique étant propre à authentifier la clef numérique reçue par comparaison avec la clef numérique générée.

Grâce à la présence de moyens de détection d'une fermeture de l'ouvrant au sein de la serrure électronique et de moyens de génération d'une clef numérique unique au sein du module de commande, et au fait que le composant électronique de reconnaissance est propre à authentifier la clef numérique reçue par comparaison avec la clef numérique unique générée, le risque qu'une personne non autorisée compromette l'intérieur du compartiment fermé par l'ouvrant, en utilisant une ou des clef(s) ayant déjà servie(s), est fortement réduit. Ceci permet d'obtenir un haut niveau de sécurité et d'ainsi pouvoir par exemple attribuer à un utilisateur identifié un accès temporaire à l'intérieur du compartiment, par fourniture à cet utilisateur de la clef numérique générée. Le véhicule sans pilote selon l'invention permet ainsi avantageusement de s'assurer que seul l'utilisateur identifié, ou un des mandataires qu'il a préalablement désignés, est à même de déverrouiller l'ouvrant pour accéder au compartiment correspondant du véhicule.

Avantageusement, le composant électronique comprend une horloge électronique, une information d'horodatage est associée à la clef numérique unique générée et le composant électronique n'est propre à authentifier une clef numérique reçue par comparaison avec la clef numérique unique générée que pendant une durée prédéterminée.

Cette caractéristique permet de réduire le risque de compromission de l'accès au compartiment correspondant à l'ouvrant, en cas de vol, après son émission, d'une clef numérique générée. Un gain de sécurité supplémentaire est ainsi obtenu.

Selon une caractéristique technique particulière de l'invention, le véhicule est un véhicule terrestre apte à être piloté à distance par voie radioélectrique.

Selon une autre caractéristique technique particulière de l'invention, le véhicule est un véhicule terrestre autonome.

Avantageusement, les moyens d'alimentation électrique comprennent un élément de stockage d'énergie électrique et un élément de conversion d'énergie lumineuse en énergie électrique, tel que par exemple un panneau photovoltaïque, relié à l'élément de stockage d'énergie électrique.

Ceci permet une recharge continue et autonome de l'élément de stockage d'énergie électrique, et contribue ainsi à réduire voire à éliminer les opérations de remplacement des moyens d'alimentation électrique.

Selon une caractéristique technique particulière de l'invention, la serrure électronique comprend en outre des moyens d'alimentation électrique des moyens moteurs.

Avantageusement, les moyens d'alimentation électrique des moyens moteurs comprennent un élément de stockage d'énergie électrique et un élément de conversion d'énergie lumineuse en énergie électrique, tel que par exemple un panneau photovoltaïque, relié à l'élément de stockage d'énergie électrique.

Ceci permet une recharge continue et autonome de l'élément de stockage d'énergie électrique, et contribue ainsi à réduire voire à éliminer les opérations de remplacement des moyens d'alimentation électrique des moyens moteurs.

Selon l'invention, le véhicule comprend au moins deux compartiments, et au moins deux ouvrants, chaque ouvrant formant accès à un compartiment distinct, et le véhicule comporte en outre au moins un séparateur de compartiments escamotable et des moyens moteurs reliés audit séparateur et aptes à escamoter et à remettre en place le séparateur suivant la valeur d'un signal de commande reçu, ledit séparateur étant agencé entre deux compartiments de sorte à séparer en position non escamotée les espaces intérieurs respectifs définis par ces compartiments, le module de commande étant relié en outre aux moyens moteurs et étant propre à transmettre aux moyens moteurs un signal de commande pour l'escamotage ou la remise en place du séparateur.

Ceci permet de pouvoir mutualiser au moins deux compartiments du véhicule de sorte à obtenir un compartiment de taille plus grande. Il est ainsi possible d'adapter avantageusement la taille de l'espace intérieur du compartiment en résultant, en fonction de la taille de l'objet destiné à y être reçu.

Dans une réalisation particulière de l'invention, les moyens de génération de clefs numériques du module de commande sont aptes, lorsque ledit au moins un séparateur de compartiments est dans une position escamotée, à ne générer une clef numérique unique que lorsque la fermeture de tous les ouvrants qui forment accès aux compartiments agencés de part et d'autre dudit ou desdits séparateur(s) escamoté(s) est détectée ; et le composant électronique de reconnaissance du module de commande est apte, lorsque ledit au moins un séparateur de compartiments est dans une position escamotée, à générer, suite à authentification d'une clef numérique, un signal de consigne de désactivation simultanée à destination des moyens moteurs de toutes les serrures électroniques associées aux ouvrants qui forment accès aux compartiments agencés de part et d'autre dudit ou desdits séparateur(s) escamoté(s), pour le déverrouillage desdits ouvrants.

Ceci permet, en cas de mutualisation d'au moins deux compartiments du véhicule, de faciliter l'accès à l'intérieur du compartiment en résultant, via l'ouverture simultanée de tous les ouvrants qui forment accès à ce compartiment ; tout en permettant d'assurer une gestion simple et fiable des clefs numériques générées.

Selon un autre aspect, en lien avec la réalisation particulière de l'invention décrite ci-dessus, l'invention a également pour objet un procédé de déverrouillage simultané d'au moins deux ouvrants d'un véhicule sans pilote, le procédé étant mis en oeuvre par le module de commande d'un véhicule tel que décrit ci-dessus selon la réalisation particulière de l'invention, le procédé comprenant une étape initiale d'émission d'un signal de commande d'escamotage dudit au moins un séparateur, à destination des moyens moteurs reliés audit séparateur, le procédé comprenant en outre les étapes suivantes :
- la réception, pour chaque ouvrant formant accès au compartiment agencé de part ou d'autre dudit ou d'un desdits séparateur(s) escamoté(s), d'un signal de détection de fermeture de l'ouvrant ;
- la détection de la réception de tous les signaux de fermeture associés à l'ensemble des ouvrants qui forment accès aux compartiments agencés de part et d'autre dudit ou desdits séparateur(s) escamoté(s) ;
- la génération d'une clef numérique unique ;
- le stockage, au sein du composant électronique de reconnaissance, de la clef numérique unique générée ;
- l'émission d'un signal qui comporte la clef numérique unique générée ;
- la réception d'un signal qui comporte une clef numérique ;
- l'authentification, par le composant électronique de reconnaissance, de la clef numérique reçue par comparaison avec la clef numérique générée ;
- l'émission, sur la ou chaque liaison de données concernée, d'un signal de consigne de désactivation simultanée à destination des moyens moteurs de toutes les serrures électroniques associées aux ouvrants qui forment accès aux compartiments agencés de part et d'autre dudit ou desdits séparateur(s) escamoté(s), pour le déverrouillage desdits ouvrants.

### BREVE DESCRIPTION DES FIGURES

D'autres caractéristiques et avantages de l'invention ressortiront à la lecture de la description qui suit, donnée uniquement à titre d'exemple, et faite en référence à :
- la figure 1 est une vue en perspective d'un véhicule sans pilote selon un mode de réalisation de l'invention, le véhicule comprenant trois compartiments et deux séparateurs de compartiments escamotables ;
- la figure 2 est une représentation schématique du véhicule sans pilote de la figure 1 ;
- la figure 3 est une vue analogue à celle de la figure 1, dans laquelle certains éléments de la figure 1 ne sont pas représentés pour des raisons de clarté, et dans laquelle les séparateurs de compartiments sont dans une position non escamotée ;
- la figure 4 est une vue analogue à celle de la figure 1, dans laquelle certains éléments de la figure 1 ne sont pas représentés pour des raisons de clarté, et dans laquelle les séparateurs de compartiments sont dans une position escamotée.

### DESCRIPTION DETAILLEE D'UN MODE DE REALISATION

Dans la suite de la description, on entend par « ouvrant » tout élément mécanique mobile entre une position de fermeture interdisant l'accès à l'intérieur d'un compartiment d'un véhicule, et une position d'ouverture permettant l'accès à l'intérieur du compartiment.

On entend également par « dispositif de communication » tout dispositif électronique nomade apte à transmettre et à recevoir des données via un réseau ou une portion de réseau sans fil, tel que par exemple un ordinateur portable, un téléphone, un smartphone, ou encore une tablette numérique, sans que cette liste ne soit exhaustive.

On entend en outre par « moyens moteurs » des moyens d'engagement mécanique permettant de faire évoluer une première position ou configuration mécanique d'un élément de l'invention vers une seconde position ou configuration mécanique.

On entend également par « véhicule sans pilote » tout véhicule apte à se déplacer sur terre, sur eau ou dans l'air, de manière autonome et/ou en étant piloté à distance par voie radioélectrique.

On appelle dans la suite de la description indifféremment une signature ou une clef numérique.

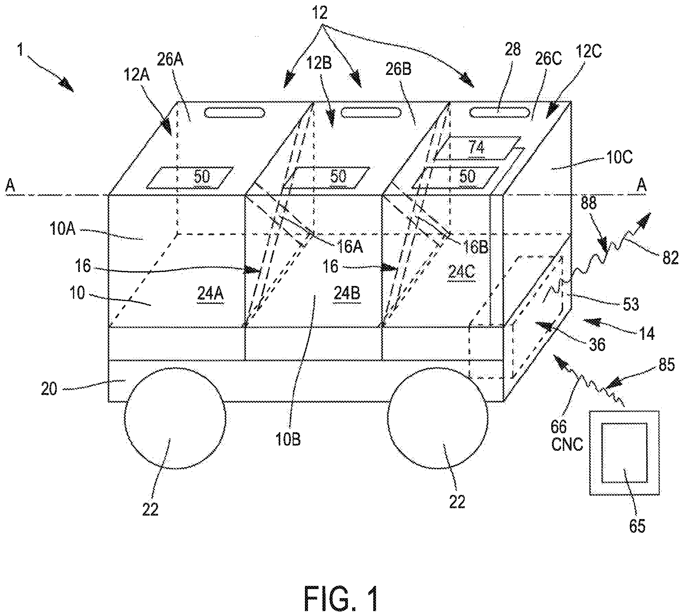

En référence aux figures 1 à 4, un véhicule sans pilote 1 comprend au moins un compartiment 10, au moins un ouvrant 12, et un dispositif 14 de déverrouillage de l'ouvrant 12. De préférence, le véhicule sans pilote 1 comprend au moins deux compartiments 10, et au moins deux ouvrants 12. De préférence encore, le véhicule sans pilote 1 comprend en outre au moins un séparateur de compartiments escamotable 16 et des moyens moteurs 18 reliés au séparateur 16. Dans l'exemple de réalisation des figures 1 à 4, le véhicule sans pilote 1 comprend trois compartiments 10A, 10B, 10C, trois ouvrants 12A, 12B, 12C, et deux séparateurs escamotables 16A, 16B.

Le véhicule sans pilote 1 est par exemple un véhicule terrestre, comme illustré sur la figure 1. Dans le mode de réalisation particulier des figures 1 à 4, le véhicule sans pilote 1 est un véhicule terrestre autonome. En variante, le véhicule sans pilote 1 est un véhicule terrestre apte à être piloté à distance par voie radioélectrique. En variante encore, le véhicule sans pilote 1 est un véhicule terrestre autonome, pouvant également être ponctuellement piloté à distance par un opérateur par voie radioélectrique, par exemple dans le cadre d'une procédure d' « urgence » de reprise de pilotage manuel.

Selon le mode de réalisation particulier des figures 1 à 4, le véhicule sans pilote 1 est classiquement muni d'un châssis 20 sur lequel sont agencées plusieurs roues 22, par exemple quatre roues 22. Le véhicule sans pilote 1 est également muni d'une unité de motorisation et de navigation autonome, reliée aux roues 22, une telle unité n'étant pas représentée sur les figures pour des raisons de clarté.

Chaque compartiment 10A, 10B, 10C définit un espace intérieur 24A, 24B, 24C de réception d'un objet. Un tel objet, qui n'est pas représenté sur les figures pour des raisons de clarté, est par exemple destiné à être distribué à un utilisateur final.

Chaque ouvrant 12A, 12B, 12C forme accès à un des compartiments 10A, 10B, 10C depuis l'extérieur du véhicule 1, et est apte à fermer l'espace intérieur 24A, 24B, 24C associé à ce compartiment. Dans l'exemple de réalisation particulier des figures 1 à 4, chaque ouvrant 12A, 12B, 12C est formé d'une porte supérieure 26A, 26B, 26C pivotante autour d'un axe A-A, une telle porte formant accès à un espace intérieur 24A, 24B, 24C. Chaque porte supérieure 26A, 26B, 26C est par exemple munie d'une poignée de préhension 28 facilitant son ouverture par un utilisateur.

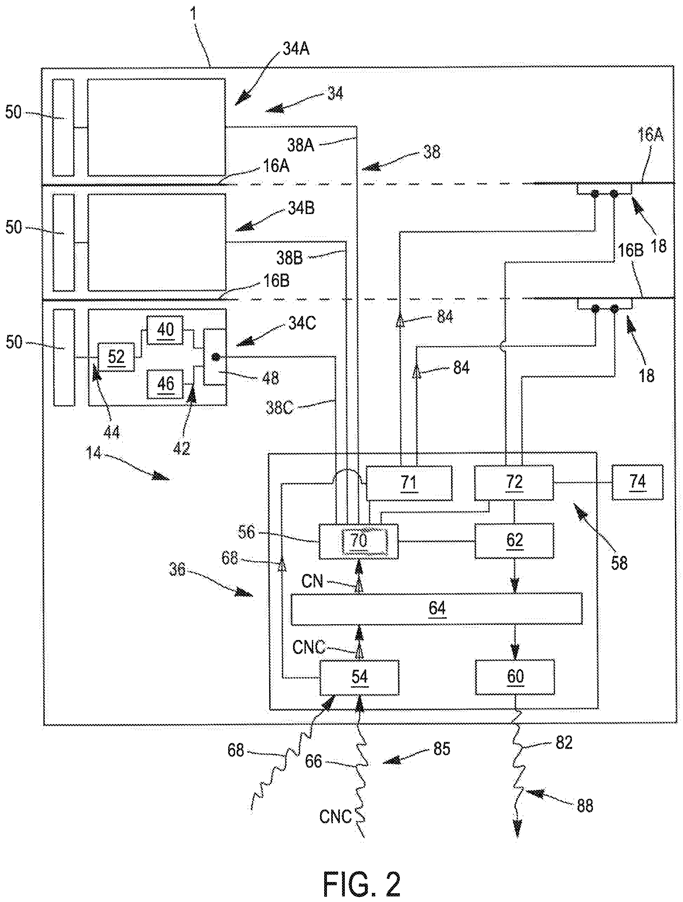

Selon un premier aspect de l'invention, le dispositif de déverrouillage 14 va maintenant être décrit en référence à la figure 1, et surtout à la figure 2.

Le dispositif de déverrouillage 14 comprend au moins une serrure électronique 34 et un module de commande 36 relié à la ou chaque serrure électronique 34 via une liaison de données 38. Dans l'exemple de réalisation particulier des figures 1 et 2, le dispositif de déverrouillage 22 comprend trois serrures électroniques 34A, 34B, 34C.

Chaque serrure électronique 34A, 34B, 34C est par exemple agencée au sein d'un des compartiments 10A, 10B, 10C. Chaque serrure électronique 34A, 34B, 34C est apte à verrouiller et déverrouiller un des ouvrants 12A, 12B, 12C. Le module de commande 36 est relié à chaque serrure électronique 34A, 34B, 34C via une liaison de données 38A, 38B, 38C distincte.

Chaque serrure électronique 34A, 34B, 34C comprend des moyens moteurs 40 et des moyens 42 de détection d'une fermeture de l'ouvrant 12A, 12B, 12C associé, comme représenté sur la figure 2. Dans l'exemple de réalisation particulier des figures 1 et 2, chaque serrure électronique 34A, 34B, 34C comprend en outre des moyens 44 d'alimentation électrique des moyens moteurs 40.

Les moyens moteurs 40 sont aptes à verrouiller et déverrouiller l'ouvrant 12A, 12B, 12C suivant la valeur d'une consigne reçue via la liaison de données 38A, 38B, 38C comme détaillé par la suite. Les moyens moteurs 40 de chaque serrure électronique 34A, 34B, 34C sont aptes à verrouiller l'ouvrant 12A, 12B, 12C associé lors de la détection de la fermeture de cet ouvrant par les moyens de détection 42. Les moyens moteurs 40 sont par exemple formés d'un micro-moteur permettant de faire mouvoir en translation un mécanisme protégeant la serrure contre des chocs liés au déplacement de l'ouvrant.

Les moyens de détection 42 sont aptes à émettre un signal de détection de la fermeture de l'ouvrant 12A, 12B, 12C associé à la serrure, sur la liaison de données 38A, 38B, 38C associée. Dans l'exemple de réalisation de la figure 2, les moyens de détection 42 comprennent un capteur de mouvement 46 apte à détecter une fermeture de l'ouvrant 12A, 12B, 12C, et un émetteur-récepteur de données 48 relié au capteur de mouvement 46 et à la liaison de données 38A, 38B, 38C associée. L'émetteur-récepteur 48 est connecté en outre aux moyens moteurs 40.

Les moyens d'alimentation électrique 44 sont reliés aux moyens moteurs 40. Dans un mode de réalisation particulier, illustré sur les figures 1 et 2, les moyens d'alimentation électrique 44 comprennent un élément 50 de conversion d'énergie lumineuse en énergie électrique, ainsi qu'un élément de stockage d'énergie électrique 52 relié à l'élément de conversion 50. L'élément 50 de conversion d'énergie lumineuse en énergie électrique est par exemple un panneau photovoltaïque. Le panneau photovoltaïque 50 est par exemple agencé à l'extérieur du véhicule 1, sur l'ouvrant 12A, 12B, 12C associé à la serrure, comme illustré sur la figure 1. L'élément de stockage d'énergie électrique 52 est par exemple une batterie. Dans une variante non représentée, l'élément 50 de conversion d'énergie lumineuse en énergie électrique est remplacé par une dynamo munie d'un système piézo-électrique relié à l'ouvrant 12A, 12B, 12C. Une telle configuration permet de générer un courant électrique lors de chaque mouvement d'ouverture et de fermeture de l'ouvrant 12A, 12B, 12C et de pouvoir ainsi recharger avantageusement l'élément de stockage d'énergie électrique 52, pour l'alimentation électrique des moyens moteurs 40.

En variante encore, les moyens d'alimentation électrique 44 comprennent uniquement un élément de stockage d'énergie électrique tel que des piles consommables, des piles rechargeables par un dispositif extérieur, ou encore une batterie. Selon cette variante, les moyens d'alimentation électrique 44 sont propres à générer un signal indicatif du niveau de charge courant des piles ou de la batterie, et l'émetteur-récepteur 48 est propre à transmettre ce signal au module de commande 36, via la liaison de données 38A, 38B, 38C.

Le module de commande 36 est par exemple agencé sous un compartiment 10C, dans un logement 53 aménagé à cet effet au sein du châssis 20, comme illustré sur la figure 1.

Le module de commande 36 comprend un capteur 54 de signaux, un composant électronique 56 relié au capteur 54 et à chaque liaison de données 38A, 38B, 38C, et des moyens d'alimentation électrique 58 reliés au composant électronique 56, comme représenté sur la figure 2. De préférence, les moyens d'alimentation électrique 58 sont également reliés aux moyens moteurs 18 des séparateurs escamotables 16A, 16B, pour l'alimentation électrique de ces moyens moteurs 18. En variante non représentée, les moyens moteurs 18 de chaque séparateur escamotable 16A, 16B sont alimentés par des moyens d'alimentation électriques dédiés, tels que par exemple un panneau photovoltaïque dédié au séparateur.

Le module de commande 36 comprend en outre des moyens 60 d'émission de signaux et des moyens 62 de génération de clefs numériques reliés aux moyens d'alimentation électrique 58, au composant électronique 56 et aux moyens d'émission 60. De préférence, comme illustré sur la figure 2, le module de commande 36 comprend également un composant 64 de codage de données. De préférence encore, le module de commande 36 comprend également une unité 71 de pilotage des moyens moteurs 18 des séparateurs escamotables 16A, 16B, reliée d'une part à ces moyens moteurs 18 et d'autre part au capteur 54.

Le capteur 54 est propre à recevoir un signal 66 comprenant une clef numérique CN, CNC émis par un dispositif de communication 65 disposé à proximité du module de commande 36, un tel dispositif de communication 65 étant illustré sur la figure 1. Le capteur 54 est apte à transmettre ce signal 66 au composant électronique 56. De préférence, le capteur 54 est propre en outre à recevoir un signal de confirmation de verrouillage d'au moins un des ouvrants 12A, 12B, 12C et à transmettre ce signal au composant électronique 56. De préférence encore, le capteur 54 est propre en outre à recevoir un signal 68 de commande de déplacement d'au moins un des séparateurs escamotables 16A, 16B, comme détaillé par la suite. Le capteur 54 est apte à transmettre ce signal de commande 68 à l'unité 71 de pilotage des moyens moteurs 18 des séparateurs.

Le composant électronique 56 est un composant électronique de reconnaissance permettant d'authentifier une clef numérique CN reçue via le signal 66. Le composant électronique 56 est propre, lorsqu'il authentifie la clef numérique reçue CN, à générer un signal de consigne de désactivation d'au moins un des moyens moteurs 40 pour le déverrouillage d'au moins un des ouvrants 12A, 12B, 12C, et à émettre ce signal sur la liaison de données 38A, 38B, 38C correspondante.

Le composant électronique 56 est par exemple muni d'un convertisseur analogique-numérique relié au capteur 54, et d'un module de calcul relié au convertisseur et formé d'au moins un processeur associé à au moins une mémoire, ces différents éléments n'étant pas représentés sur les figures pour des raisons de clarté.

De préférence, comme illustré sur la figure 2, le composant électronique 56 comprend également une horloge électronique 70. L'horloge électronique 70 est par exemple connectée au processeur du composant électronique 56.

Dans un mode de réalisation particulier, illustré sur les figures 1 et 2, les moyens d'alimentation électrique 58 comprennent un élément de stockage d'énergie électrique 72 et un élément 74 de conversion d'énergie relié à l'élément de stockage d'énergie électrique 72. L'élément de conversion d'énergie 74 est par exemple un élément de conversion d'une énergie lumineuse en énergie électrique tel que par exemple un panneau photovoltaïque. Le panneau photovoltaïque 74 est par exemple agencé à l'extérieur du véhicule 1, sur l'ouvrant 12C associé au compartiment 10C sous lequel est agencé le module de commande 36, comme illustré sur la figure 1. L'élément de stockage d'énergie électrique 72 est par exemple une batterie. Dans une variante non représentée, l'élément de conversion d'énergie 74 est un élément de conversion d'une énergie thermique en énergie électrique. Ceci permet une recharge continue et autonome de l'élément de stockage d'énergie 72, et contribue ainsi à réduire voire à éliminer les opérations de remplacement des moyens d'alimentation électrique 58. Dans une autre variante non représentée, les moyens d'alimentation électrique 58 sont formés uniquement par un élément de stockage d'énergie électrique tel que des piles consommables, des piles rechargeables par un dispositif extérieur, ou encore une batterie.

Les moyens d'émission 60 comprennent par exemple un émetteur radio-fréquences associé à un convertisseur numérique-analogique. L'émetteur radio-fréquences est par exemple propre à émettre un signal compris dans le groupe consistant en : un signal de fréquence comprise dans la bande Bluetooth, un signal de fréquence comprise dans la bande NFC (Near Field Technology), un signal de fréquence comprise dans la bande Wi-Fi et un signal de fréquence comprise dans la bande Zigbee.

Les moyens 62 de génération de clefs numériques sont propres à générer une clef numérique unique à chaque fermeture d'au moins un des ouvrants 12A, 12B, 12C, les moyens d'émission 60 étant propres à émettre un signal 82 comportant la clef numérique générée. Plus précisément, les moyens de génération 62 sont propres à générer une clef numérique unique suite à la réception par le composant électronique 56 d'au moins un signal de détection de fermeture d'un ouvrant 12A, 12B, 12C. Les moyens de génération 62 sont également propres à transmettre chaque clef numérique générée au composant électronique 56, pour stockage dans sa mémoire, permettant ainsi une authentification ultérieure d'une clef numérique CN reçue par comparaison avec la clef numérique générée. Plus précisément, le composant électronique 56 n'est propre à authentifier une clef numérique CN reçue que par comparaison avec la dernière clef numérique générée lors de la fermeture d'au moins un des ouvrants 12A, 12B, 12C. Dans un mode de réalisation préférentiel de l'invention, le processeur du composant électronique 56 est propre à remplacer dans la mémoire du composant électronique 56 une éventuelle clef numérique déjà stockée par la clef numérique unique nouvellement générée lors de la fermeture d'au moins un des ouvrants 12A, 12B, 12C. Ceci permet de réduire avantageusement l'espace mémoire nécessaire pour le stockage des clefs numériques dans la mémoire du composant électronique 56.

Les moyens de génération 62 sont par exemple formés d'un module logiciel de génération de clefs numériques uniques.

Dans l'exemple de réalisation préférentiel selon lequel le composant électronique 56 comprend également une horloge électronique 70, une information d'horodatage est associée à la clef numérique unique générée et le composant électronique 56 n'est propre à authentifier une clef numérique CN reçue par comparaison avec la clef numérique générée que pendant une durée prédéterminée. Ceci permet, en cas de vol d'une clef numérique unique après son émission par le module de commande 36, de réduire la durée d'une fenêtre temporelle « fictive » durant laquelle l'accès à l'espace intérieur d'un ou plusieurs compartiment(s) peut être compromis. Un gain de sécurité supplémentaire est ainsi obtenu.

Le composant 64 de codage de données est connecté d'une part entre le capteur 54 et le composant électronique 56, et d'autre part entre les moyens 62 de génération de clefs numériques et les moyens 60 d'émission de signaux. Le composant de codage 64 est propre à coder les clefs numériques uniques générées par les moyens de génération 62. Le composant de codage 64 est propre en outre à décoder une clef numérique codée CNC contenue dans le signal 66 et à transmettre la clef numérique décodée CN au composant électronique 56. De préférence, le composant de codage 64 est propre également à transmettre les clefs numériques codées aux moyens d'émission 60, après réception par le composant électronique 56 d'un signal de confirmation de verrouillage d'au moins un des ouvrants 12A, 12B, 12C. En variante, le composant de codage 64 est propre à transmettre les clefs numériques codées aux moyens d'émission 60 sitôt après leur codage.

De préférence, le composant de codage 64 est un composant de chiffrement symétrique. Plus particulièrement, le composant de codage 64 est propre à appliquer, sur la clef numérique unique générée par les moyens de génération 62, un algorithme de chiffrement symétrique ayant pour paramètre une clef cryptographique symétrique. Dans un mode de réalisation préférentiel, le composant de chiffrement symétrique 64 comporte une mémoire. Selon ce mode de réalisation préférentiel, le composant de chiffrement symétrique 64 est propre à régénérer, au bout d'une durée prédéterminée, une nouvelle clef cryptographique symétrique servant de paramètre à l'algorithme de chiffrement symétrique, et à conserver dans sa mémoire la ou chaque clef cryptographique symétrique générée précédemment, tant que des clefs numériques uniques codées par ces clefs symétriques sont encore en circulation. Ceci permet, en cas de vol d'une clef de chiffrement symétrique après sa génération par le composant de chiffrement symétrique 64, de réduire la durée d'une fenêtre temporelle « fictive » durant laquelle l'accès à l'espace intérieur d'un ou plusieurs compartiment(s) peut être compromis. Un gain de sécurité supplémentaire est ainsi obtenu.

En conservant la clef cryptographique symétrique générée, le composant de codage 64 est ainsi le seul à pouvoir décoder les clefs numériques codées transmises aux moyens d'émission 60. Ceci permet d'augmenter le niveau de confidentialité des clefs générées. Dans une variante de réalisation, le composant de codage 64 est un composant de masquage ou d'obfuscation de données. Dans un autre mode de réalisation, qui peut se combiner aux modes de réalisation précédents, le composant de codage 64 est propre en outre à appliquer, sur une clef numérique qu'il a préalablement codée, un algorithme de chiffrement asymétrique ayant pour paramètre une clef cryptographique publique préalablement reçue. L'algorithme de chiffrement asymétrique est par exemple un algorithme de type RSA (Rivest Shamir Adleman). Ceci permet d'éviter, en cas de compromission du composant de codage 64 par un utilisateur mal intentionné, que cet utilisateur puisse compromettre l'accès à l'ensemble des compartiments du véhicule. Un gain de sécurité supplémentaire est ainsi obtenu. Dans un autre mode de réalisation, qui peut se combiner aux modes de réalisation précédents, le composant de codage 64 à propre à adjoindre une signature numérique à chaque clef numérique unique générée. La signature numérique est par exemple une signature numérique de type SHA (Secure Hash Algorithm).

Chaque liaison de données 38A, 38B, 38C est une liaison bidirectionnelle filaire ou non filaire. Dans le mode de réalisation de l'invention des figures 1 et 2, chaque liaison de données 38A, 38B, 38C est par exemple une liaison radioélectrique bidirectionnelle. En variante non représentée, chaque liaison de données 38A, 38B, 38C est une liaison point à point bidirectionnelle codée.

L'unité 71 de pilotage des moyens moteurs 18 est propre, suite à la réception d'un signal 68 de commande de déplacement d'un séparateur escamotable 16A, 16B, à transmettre aux moyens moteurs 18 associés un signal 84 de commande pour l'escamotage ou la remise en place de ce séparateur.

Le dispositif de communication 65 est apte à émettre, sur une liaison sans fil 85, le signal 66 comprenant une clef numérique codée CNC ou non codée CN.

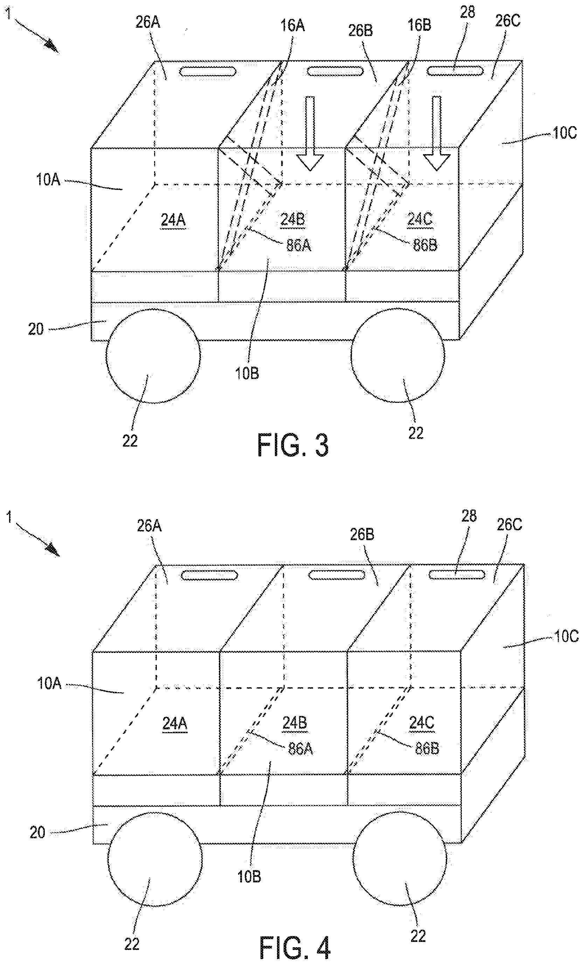

Chaque séparateur escamotable 16A, 16B est mobile entre une position non-escamotée, représentée sur la figure 3, et une position escamotée, représentée sur la figure 4 ; et inversement.

Chaque séparateur de compartiments escamotable 16A, 16B est agencé entre deux compartiments 10A, 10B, 10C de sorte à séparer en position non escamotée les espaces intérieurs respectifs 24A, 24B, 24C définis par ces compartiments. Par exemple, dans le mode de réalisation particulier des figures 1 et 2 selon lequel le véhicule sans pilote 1 comprend deux séparateurs escamotables 16A, 16B, un premier séparateur 16A sépare, en position non-escamotée, les espaces intérieurs 24A, 24B définis par un premier et un deuxième compartiments 10A, 10B. Toujours selon ce même mode de réalisation particulier, un second séparateur 16B sépare, en position non-escamotée, les espaces intérieurs 24B, 24C définis par le deuxième compartiment 10B et par un troisième compartiment 10C.

Comme illustré sur les figures 3 et 4, chaque séparateur escamotable 16A, 16B est par exemple formé d'un battant en forme de croix, apte à s'escamoter dans le châssis 20, à travers une fente 86A, 86B prévue à cet effet dans le châssis 20.

Les moyens moteurs 18 de chaque séparateur 16A, 16B de compartiments sont aptes à escamoter et à remettre en place le séparateur 16A, 16B suivant la valeur du signal de commande 84 reçu. Les moyens moteurs 18 de chaque séparateur 16A, 16B sont par exemple formés d'un micro-moteur permettant de déplacer en translation le séparateur entre sa position non-escamotée et sa position escamotée, et réciproquement selon la valeur du signal de commande 84 reçu.

Dans un mode de réalisation particulier de l'invention, les compartiments agencés sur le véhicule sans pilote sont groupés dans un ou plusieurs coffres modulables et amovibles, pouvant être fixés au châssis dudit véhicule par l'intermédiaire des moyens mécaniques ou électromécaniques. Le ou les coffres peuvent être verrouillés sur ledit châssis par une serrure électronique tel que décrite précédemment.

La modularité des coffres est assurée par des séparateurs de compartiments escamotables, comme décrit précédemment, et peut être gérée de la même manière.

Dans le cas de plusieurs coffres, ils peuvent être empilés, pour obtenir un agencement optimisé sur le véhicule sans pilote. Les coffres peuvent être remplis à l'avance et placés sur le véhicule ou sur le meuble au moment de la distribution. Les coffres modulaires selon l'invention sont interchangeables, et la livraison se trouve ainsi accélérée.

Le fonctionnement du véhicule sans pilote 1 va maintenant être décrit.

On suppose pour la suite qu'un utilisateur « distributeur » place, au sein du véhicule 1, un objet à distribuer destiné à l'utilisateur du dispositif de communication 65, appelé ci-après « destinataire ». Plus précisément, l'utilisateur « distributeur » place l'objet à distribuer dans un des compartiments 10A, 10B, 10C du véhicule 1, puis ferme l'ouvrant 12A, 12B, 12C associé. L'objet à distribuer est par exemple un colis. Les moyens de détection 42 agencés au sein de la serrure électronique 34A, 34B, 34C correspondante détectent la fermeture de l'ouvrant 12A, 12B, 12C associé, et émettent un signal de détection de la fermeture de l'ouvrant 12A, 12B, 12C sur la liaison de données 38A, 38B, 38C associée.

Au cours d'une étape suivante, le composant électronique de reconnaissance 56 reçoit un signal de détection de fermeture de l'ouvrant 12A, 12B, 12C. Le composant électronique 56 génère un signal de consigne d'activation des moyens moteurs 40 pour le verrouillage de l'ouvrant 12A, 12B, 12C, et émet ce signal sur la liaison de données 38A, 38B, 38C associée. Après réception par la serrure électronique 34A, 34B, 34C du signal de consigne de d'activation des moyens moteurs, les moyens moteurs 40 verrouillent l'ouvrant 12A, 12B, 12C.

Au cours d'une étape suivante, les moyens de génération 62 génèrent une clef numérique unique CN. Les moyens de génération 62 transmettent cette clef numérique unique CN au composant électronique de reconnaissance 56 et au composant de codage 64.

Au cours d'une étape suivante, le composant électronique 56 stocke la clef numérique unique CN dans sa mémoire. De préférence, au cours de cette même étape, le composant de codage 64 code la clef numérique CN.

De préférence, au cours d'une étape suivante, l'utilisateur « distributeur » transmet au capteur 54, par exemple via un dispositif de communication, un signal de confirmation de verrouillage de l'ouvrant 12A, 12B, 12C. Suite à la réception du signal de confirmation par le composant électronique 56 via le capteur 54, le composant électronique 56 transmet au composant de codage 64 un signal de consigne de transmission de la clef numérique codée CNC aux moyens d'émission 60. A l'issue de cette étape, le composant de codage 64 transmet la clef numérique codée CNC aux moyens d'émission 60 du module de commande 36. Les moyens d'émission 60 émettent alors le signal 82 comportant la clef numérique codée CNC sur une liaison de données 88, par exemple à destination d'un serveur de stockage de données. Au cours de cette étape préférentielle, si le composant électronique 56 n'a reçu, après l'écoulement d'une durée prédéterminée, aucun signal de confirmation de verrouillage émis par un dispositif de communication, le composant électronique 56 génère un signal de consigne de désactivation des moyens moteurs 40 pour le déverrouillage de l'ouvrant 12A, 12B, 12C, et émet ce signal sur la liaison de données 38A, 38B, 38C associée. L'étape initiale de fermeture de l'ouvrant 12A, 12B, 12C par l'utilisateur est alors remise en oeuvre.

On suppose pour la suite que le véhicule sans pilote 1 se déplace jusqu'à un utilisateur « destinataire », pour la livraison de l'objet à distribuer ; et que cet utilisateur est averti de l'arrivée du véhicule sans pilote 1, par exemple via une notification sur son dispositif de communication 65. On suppose en outre que l'utilisateur « destinataire » reçoit, sur son dispositif de communication 65, la clef numérique unique codée CNC, par exemple via le serveur de stockage de données. On suppose enfin que le destinataire se rend à proximité du module de commande 36, puis qu'il saisit, via son dispositif de communication 65, une instruction d'envoi de la clef numérique codée CNC au module de commande 36. Le dispositif de communication 65 émet alors le signal 66 contenant la clef numérique codée CNC sur la liaison sans fil 85, à destination du module de commande 36.

Au cours d'une étape suivante, le capteur 54 reçoit le signal 66 contenant la clef numérique codée CNC. Le capteur 54 transmet alors la clef numérique codée CNC au composant de codage 64. Au cours de cette même étape, le composant de codage 64 décode la clef numérique codée CNC puis transmet la clef numérique obtenue CN au composant électronique de reconnaissance 56.

Au cours d'une étape suivante, le composant électronique de reconnaissance 56 authentifie la clef numérique CN reçue par comparaison avec la clef numérique préalablement stockée au sein de sa mémoire.

Au cours d'une étape suivante, le composant électronique de reconnaissance 56 génère un signal de consigne de désactivation à destination des moyens moteurs 40 de la serrure électronique 34A, 34B, 34C associée à l'ouvrant 12A, 12B, 12C qui forme accès au compartiment 10A, 10B, 10C à l'intérieur duquel est agencé l'objet à distribuer. Le composant électronique de reconnaissance 56 émet alors ce signal de consigne de désactivation sur la liaison de données 38A, 38B, 38C correspondante. Après réception par la serrure électronique 34A, 34B, 34C du signal de consigne de désactivation des moyens moteurs, les moyens moteurs 40 déverrouillent l'ouvrant 12A, 12B, 12C, libérant ainsi l'accès à l'espace intérieur 24A, 24B, 24C du compartiment 10A, 10B, 10C correspondant. A l'issue de cette étape, l'utilisateur « destinataire » peut ouvrir cet ouvrant 12A, 12B, 12C, puis récupérer l'objet à l'intérieur du compartiment 10A, 10B, 10C.

Selon un deuxième aspect, complémentaire mais indépendant du premier aspect, l'invention concerne également un procédé de déverrouillage simultané d'au moins deux ouvrants 12A, 12B, 12C du véhicule sans pilote 1.

Le procédé de déverrouillage simultané est mis en oeuvre par le module de commande 36 du véhicule 1, dans l'exemple de réalisation particulier selon lequel le véhicule 1 comprend au moins un séparateur de compartiments escamotable 16 et des moyens moteurs 18 reliés au séparateur 16.

Selon un mode de réalisation particulier de cet exemple, les moyens 62 de génération de clefs numériques du module de commande 36 sont avantageusement aptes, lorsque au moins un des séparateurs 16A, 16B est dans sa positon escamotée, à ne générer une clef numérique unique que lorsque la fermeture de tous les ouvrants 12A, 12B, 12C qui forment accès aux compartiments 10A, 10B, 10C agencés de part et d'autre de ce ou ces séparateur(s) est détectée. Par exemple, lorsque le premier séparateur 16A est dans sa position escamotée, les moyens 62 de génération de clefs numériques sont aptes à ne générer une clef numérique unique que lorsque la fermeture des premier et deuxième ouvrants 12A, 12B, qui forment accès aux premier et deuxième compartiments 10A, 10B, est détectée.

En outre, toujours selon ce même mode de réalisation particulier, le composant électronique de reconnaissance 56 est avantageusement apte, lorsque au moins un des séparateurs 16A, 16B est dans sa positon escamotée, à générer, suite à authentification d'une clef numérique reçue CN, un signal de consigne de désactivation simultanée à destination des moyens moteurs 40 de toutes les serrures électroniques 34A, 34B, 34C associées aux ouvrants 12A, 12B, 12C qui forment accès aux compartiments 10A, 10B, 10C agencés de part et d'autre de ce ou ces séparateur(s). Le déverrouillage simultané de ces ouvrants est alors obtenu. Par exemple, lorsque le premier séparateur 16A est dans sa position escamotée, le composant électronique de reconnaissance 56 est apte à générer, suite à authentification d'une clef numérique reçue CN, un signal de consigne de désactivation simultanée à destination des moyens moteurs 40 des première et deuxième serrures électroniques 34A, 34B, associées aux premier et deuxième ouvrants 12A, 12B qui forment accès aux premier et deuxième compartiments 10A, 10B.

Le procédé de déverrouillage simultané d'ouvrants d'un véhicule sans pilote va maintenant être décrit en référence au déverrouillage simultané des premier et deuxième ouvrants 12A, 12B ; étant entendu qu'il s'applique de la même manière pour le déverrouillage simultané d'ouvrants 12A, 12B, 12C du véhicule 1 en nombre supérieur à deux.

Initialement, les premier et deuxième séparateurs escamotables 16A, 16B sont chacun dans leur position non-escamotée, et les ouvrants 12A, 12B, 12C du véhicule sont tous déverrouillés. On suppose que le capteur 54 de signaux reçoit un signal 68 de commande de déplacement du premier séparateur escamotable 16A. Ce signal de commande 68 correspond à un ordre de mutualisation des premier et deuxième compartiments 10A, 10B; par exemple transmis par un utilisateur « distributeur » via un dispositif de communication. Le capteur 54 transmet alors ce signal de commande 68 à l'unité 71 de pilotage des moyens moteurs 18 des séparateurs.

Le procédé comprend une étape initiale d'émission d'un signal 84 de commande d'escamotage du premier séparateur 16A, à destination des moyens moteurs 18 reliés au premier séparateur 16A. Le signal 84 de commande d'escamotage est émis par l'unité de pilotage 71. Le premier séparateur 16A est alors déplacé de sa position non-escamotée vers sa position escamotée par les moyens moteurs 18 associés.

On suppose pour la suite que l'utilisateur « distributeur » place, au sein du véhicule 1, un objet à distribuer destiné à l'utilisateur du dispositif de communication 65, appelé ci-après « destinataire ». Plus précisément, l'utilisateur « distributeur » place l'objet à distribuer dans les premier et deuxième compartiments 10A, 10B du véhicule 1, puis ferme les premier et deuxième ouvrants 12A, 12B associés. L'objet à distribuer est par exemple un colis. Les moyens de détection 42 agencés au sein de chacune des première et deuxième serrures électroniques 34A, 34B détectent la fermeture de l'ouvrant 12A, 12B associé, et émettent un signal de détection de la fermeture de l'ouvrant 12A, 12B sur la liaison de données 38A, 38B associée.

Au cours d'une étape suivante, le composant électronique de reconnaissance 56 reçoit un signal de détection de fermeture du premier ouvrant 12A, et un signal de détection de fermeture du deuxième ouvrant 12B. Plus généralement, le procédé reboucle sur cette étape tant que le composant électronique de reconnaissance 56 n'a pas reçu tous les signaux de fermeture associés à l'ensemble des ouvrants qui forment accès aux compartiments agencés de part et d'autre du ou des séparateur(s) escamoté(s).

Au cours d'une étape suivante, le composant électronique de reconnaissance 56 détecte la réception de tous les signaux de fermeture associés à l'ensemble des ouvrants 12A, 12B qui forment accès aux compartiments 10A, 10B agencés de part et d'autre du séparateur escamoté 16A.

Au cours d'une étape suivante, les moyens de génération 62 génèrent une clef numérique unique CN. Les moyens de génération 62 transmettent cette clef numérique unique CN au composant électronique de reconnaissance 56 et au composant de codage 64.

Au cours d'une étape suivante, le composant électronique 56 stocke la clef numérique unique CN dans sa mémoire. De préférence, au cours de cette même étape, le composant de codage 64 code la clef numérique CN.

Au cours d'une étape suivante, le composant de codage 64 transmet la clef numérique codée CNC aux moyens d'émission 60 du module de commande 36. Les moyens d'émission 60 émettent alors le signal 82 comportant la clef numérique codée CNC sur une liaison de données 88, par exemple à destination d'un serveur de stockage de données.

On suppose pour la suite que le véhicule sans pilote 1 se déplace jusqu'à l'utilisateur « destinataire », pour la livraison de l'objet à distribuer ; et que cet utilisateur est averti de l'arrivée du véhicule sans pilote 1, par exemple via une notification sur son dispositif de communication 65. On suppose en outre que l'utilisateur « destinataire » reçoit, sur son dispositif de communication 65, la clef numérique unique codée CNC, par exemple via le serveur de stockage de données. On suppose enfin que le destinataire se rend à proximité du module de commande 36, puis qu'il saisit, via son dispositif de communication 65, une instruction d'envoi de la clef numérique codée CNC au module de commande 36. Le dispositif de communication 65 émet alors le signal 66 contenant la clef numérique codée CNC sur la liaison sans fil 85, à destination du module de commande 36.

Au cours d'une étape suivante, le capteur 54 reçoit le signal 66 contenant la clef numérique codée CNC. Le capteur 54 transmet alors la clef numérique codée CNC au composant de codage 64. Au cours de cette même étape, le composant de codage 64 décode la clef numérique codée CNC puis transmet la clef numérique obtenue CN au composant électronique de reconnaissance 56.

Au cours d'une étape suivante, le composant électronique de reconnaissance 56 authentifie la clef numérique CN reçue par comparaison avec la clef numérique préalablement stockée au sein de sa mémoire.

Au cours d'une étape suivante, le composant électronique de reconnaissance 56 génère un signal de consigne de désactivation simultanée à destination des moyens moteurs 40 de toutes les serrures électroniques 34A, 34B associées aux ouvrants 12A, 12B qui forment accès aux compartiments 10A, 10B agencés de part et d'autre du séparateur escamoté 16A. Le composant électronique de reconnaissance 56 émet alors ce signal de consigne de désactivation simultanée sur des première et deuxième liaisons de données 38A, 38B correspondantes. Le déverrouillage simultané des ouvrants 12A, 12B correspondants est alors obtenu. A l'issue de cette étape, l'utilisateur « destinataire » peut ouvrir les premier et deuxième ouvrants 12A, 12B, puis récupérer l'objet à l'intérieur des premier et deuxième compartiments 10A, 10B.

On conçoit ainsi que le procédé de déverrouillage simultané d'au moins deux ouvrants d'un véhicule sans pilote selon l'invention permet de pouvoir mutualiser au moins deux compartiments du véhicule de sorte à obtenir un compartiment de taille plus grande ; tout en facilitant l'accès à l'intérieur du compartiment en résultant, via l'ouverture simultanée de tous les ouvrants qui forment accès à ce compartiment, et en permettant d'assurer une gestion simple et fiable des clefs numériques générées.

L'invention est décrite dans ce qui précède à titre d'exemple. Il est entendu que l'homme du métier est à même de réaliser différentes variantes de réalisation de l'invention sans pour autant sortir du cadre de l'invention. En particulier, bien que l'invention soit décrite en référence à un véhicule terrestre autonome, elle s'applique plus généralement à tout véhicule sans pilote apte à se déplacer sur terre, sur eau ou dans l'air, de manière autonome et/ou en étant piloté à distance par voie radioélectrique. L'invention s'applique par exemple de la même manière à un drone.

## Revendications

1. Véhicule sans pilote (1), comprenant :
- au moins deux compartiments (10, 10A, 10B, 10C) définissant chacun un espace intérieur (24A, 24B, 24C) de réception d'un objet ;
- au moins deux ouvrants (12, 12A, 12B, 12C), chaque ouvrant formant accès à un compartiment distinct depuis l'extérieur du véhicule (1), chaque ouvrant étant apte à fermer un desdits espaces intérieurs (24A, 24B, 24C) ;
- un dispositif (14) de déverrouillage de chaque ouvrant, le dispositif (14) comprenant au moins une serrure électronique (34, 34A, 34B, 34C) et un module de commande (36) relié à la serrure électronique via une liaison de données (38, 38A, 38B, 38C), la serrure électronique comprenant des moyens moteurs (40) aptes à verrouiller et déverrouiller l'ouvrant suivant la valeur d'une consigne reçue via la liaison de données, le module de commande (36) comprenant un capteur (54) d'un signal (66) comprenant une clef numérique et un composant électronique de reconnaissance (56) permettant d'authentifier la clef numérique, le capteur (54) étant propre à transmettre le signal (66) au composant électronique de reconnaissance (56), ledit composant étant relié à la liaison de données et étant alimenté par des moyens d'alimentation électrique (58), l'authentification de la clef numérique par le composant électronique (56) générant un signal de consigne de désactivation des moyens moteurs (40) pour le déverrouillage de l'ouvrant,
dans lequel la serrure électronique comprend des moyens (42) de détection d'une fermeture de l'ouvrant aptes à émettre un signal de détection de fermeture sur la liaison de données, et le module de commande (36) comprend en outre des moyens (60) d'émission d'un signal (82) et des moyens (62) de génération de clefs numériques reliés aux moyens d'alimentation électrique (58), au composant électronique (56) et aux moyens d'émission (60), les moyens de génération (62) étant propres à générer une clef numérique unique à chaque fermeture de l'ouvrant, le signal émis (82) comportant la clef numérique unique générée, le composant électronique (56) étant propre à authentifier la clef numérique reçue par comparaison avec la clef numérique générée, **caractérisé en ce que** le véhicule (1) comporte en outre au moins un séparateur de compartiments escamotable (16, 16A, 16B) et des moyens moteurs (18) reliés audit séparateur et aptes à escamoter et à remettre en place le séparateur suivant la valeur d'un signal de commande (84) reçu, ledit séparateur étant agencé entre deux compartiments (10A, 10B, 10C) de sorte à séparer en position non escamotée les espaces intérieurs respectifs (24A, 24B, 24C) définis par ces compartiments, le module de commande (36) étant relié en outre aux moyens moteurs (18) et étant propre à transmettre aux moyens moteurs (18) un signal de commande (84) pour l'escamotage ou la remise en place du séparateur.

2. Véhicule (1) selon la revendication 1, **caractérisé en ce que** le composant électronique (56) comprend une horloge électronique (70), **en ce qu'**une information d'horodatage est associée à la clef numérique unique générée et **en ce que** le composant électronique (56) n'est propre à authentifier une clef numérique reçue par comparaison avec la clef numérique unique générée que pendant une durée prédéterminée.

3. Véhicule (1) selon la revendication 1 ou 2, **caractérisé en ce que** le véhicule (1) est un véhicule terrestre apte à être piloté à distance par voie radioélectrique.

4. Véhicule (1) selon l'une quelconque des revendications précédentes, **caractérisé en ce que** le véhicule (1) est un véhicule terrestre autonome.

5. Véhicule (1) selon l'une quelconque des revendications précédentes, **caractérisé en ce que** les moyens d'alimentation électrique (58) comprennent un élément (72) de stockage d'énergie électrique et un élément (74) de conversion d'énergie lumineuse en énergie électrique, tel que par exemple un panneau photovoltaïque, relié à l'élément (72) de stockage d'énergie électrique.

6. Véhicule (1) selon l'une quelconque des revendications précédentes, **caractérisé en ce que** la serrure électronique (34, 34A, 34B, 34C) comprend en outre des moyens (44) d'alimentation électrique des moyens moteurs (40).

7. Véhicule (1) selon la revendication 6, **caractérisé en ce que** les moyens (44) d'alimentation électrique des moyens moteurs (40) comprennent un élément (52) de stockage d'énergie électrique et un élément (50) de conversion d'énergie lumineuse en énergie électrique, tel que par exemple un panneau photovoltaïque, relié à l'élément (52) de stockage d'énergie électrique.

8. Véhicule (1) selon une quelconque des revendications précédentes , **caractérisé en ce que** les moyens (62) de génération de clefs numériques du module de commande (36) sont aptes, lorsque ledit au moins un séparateur de compartiments est dans une position escamotée, à ne générer une clef numérique unique que lorsque la fermeture de tous les ouvrants qui forment accès aux compartiments agencés de part et d'autre dudit ou desdits séparateur(s) escamoté(s) est détectée ; et **en ce que** le composant électronique de reconnaissance (56) du module de commande (36) est apte, lorsque ledit au moins un séparateur de compartiments est dans une position escamotée, à générer, suite à authentification d'une clef numérique, un signal de consigne de désactivation simultanée à destination des moyens moteurs (40) de toutes les serrures électroniques associées aux ouvrants qui forment accès aux compartiments agencés de part et d'autre dudit ou desdits séparateur(s) escamoté(s), pour le déverrouillage desdits ouvrants.

9. Véhicule (1) selon une quelconque des revendications précédentes, **caractérisé en ce que** les aux moins deux compartiments (10, 10A, 10B, 10C) sont groupés dans un ou plusieurs coffres modulables et amovibles, pouvant être fixés au châssis dudit véhicule (1) par l'intermédiaire des moyens mécaniques ou électromécaniques.

10. Procédé de déverrouillage simultané d'au moins deux ouvrants (12A, 12B, 12C) d'un véhicule sans pilote (1), le procédé étant mis en oeuvre par le module de commande (36) d'un véhicule (1) selon la revendication 8, le procédé comprenant une étape initiale d'émission d'un signal (68) de commande d'escamotage dudit au moins un séparateur (16, 16A, 16B), à destination des moyens moteurs (18) reliés audit séparateur, le procédé comprenant en outre les étapes suivantes :
- la réception, pour chaque ouvrant formant accès au compartiment agencé de part ou d'autre dudit ou d'un desdits séparateur(s) escamoté(s), d'un signal de détection de fermeture de l'ouvrant ;
- la détection de la réception de tous les signaux de fermeture associés à l'ensemble des ouvrants qui forment accès aux compartiments agencés de part et d'autre dudit ou desdits séparateur(s) escamoté(s) ;
- la génération d'une clef numérique unique ;
- le stockage, au sein du composant électronique de reconnaissance, de la clef numérique unique générée ;
- l'émission d'un signal (82) qui comporte la clef numérique unique générée ;
- la réception d'un signal (66) qui comporte une clef numérique ;
- l'authentification, par le composant électronique de reconnaissance (56), de la clef numérique reçue par comparaison avec la clef numérique générée ;
- l'émission, sur la ou chaque liaison de données concernée, d'un signal de consigne de désactivation simultanée à destination des moyens moteurs (40) de toutes les serrures électroniques associées aux ouvrants qui forment accès aux compartiments agencés de part et d'autre dudit ou desdits séparateur(s) escamoté(s), pour le déverrouillage desdits ouvrants.

11. Programme d'ordinateur comportant des instructions qui, lorsqu'exécutées par un processeur d'un système informatique, entraînent la mise en oeuvre d'un procédé selon la revendication 10.

## Patentansprüche

1. Fahrerloses Fahrzeug (1), umfassend:
- mindestens zwei Fächer (10, 10A, 10B, 10C), die jeweils einen Innenraum (24A, 24B, 24C) für den Empfang eines Objekts definieren;
- mindestens zwei Klappen (12, 12A, 12B, 12C), wobei jede Klappe Zugang zu einem verschiedenen Fach von außerhalb des Fahrzeugs (1) bildet, wobei jede Klappe imstande ist, einen der Innenräume (24A, 24B, 24C) zu schließen;
- eine Entriegelungsvorrichtung (14) jeder Klappe, wobei die Vorrichtung (14) mindestens ein elektronisches Schloss (34, 34A, 34B, 34C) und ein Steuermodul (36) umfasst, das mit dem elektronischen Schloss über eine Datenverbindung (38, 38A, 38B, 38C) verbunden ist, wobei das elektronische Schloss Motormittel (40) umfasst, die imstande sind, die Klappe gemäß dem Wert eines Sollwerts, empfangen über die Datenverbindung, zu verriegeln und zu entriegeln, wobei das Steuermodul (36) einen Sensor (54) eines Signals (66) umfasst, das einen numerischen Schlüssel umfasst, und ein elektronisches Wiedererkennungsbauteil (56), das erlaubt, den numerischen Schlüssel zu authentifizieren, wobei der Sensor (54) imstande ist, das Signal (66) an das elektronische Wiedererkennungsbauteil (56) zu übertragen, wobei das Bauteil mit der Datenverbindung verbunden ist und von elektrischen Versorgungsmitteln (58) versorgt wird, wobei die Authentifizierung des numerischen Schlüssels durch das elektronische Bauteil (56) ein Deaktivierungs-Sollwertsignal der Motormittel (40) für die Entriegelung der Klappe erzeugt,
wobei das elektronische Schloss Detektionsmittel (42) eines Schließens der Klappe umfasst, die imstande sind, ein Verschlussdetektionssignal über die Datenverbindung zu senden, und das Steuermodul (36) ferner Sendemittel (60) eines Signals (82) und Erzeugungsmittel (62) von digitalen Schlüsseln umfasst, die mit den elektrischen Versorgungsmitteln (58), dem elektronischen Bauteil (56) und den Sendemitteln (60) verbunden sind, wobei die Erzeugungsmittel (62) imstande sind, einen einzigen numerischen Schlüssel bei jedem Schließen der Klappe zu erzeugen, wobei das gesendete Signal (82) den einzigen erzeugten numerischen Schlüssel aufweist, wobei das elektronische Bauteil (56) imstande ist, den empfangenen numerischen Schlüssel durch Vergleichen mit dem erzeugten numerischen Schlüssel zu authentifizieren, **dadurch gekennzeichnet, dass** das Fahrzeug (1) ferner mindestens einen versenkbaren Fächerseparator (16, 16A, 16B) aufweist und Motormittel (18), die mit dem Separator verbunden sind und imstande, den Separator gemäß dem Wert eines empfangenen Steuersignals (84) zu versenken und zurückzuplatzieren, wobei der Separator zwischen zwei Fächern (10A, 10B, 10C) derart ausgebildet ist, dass er in nicht versenkter Stellung die jeweiligen Innenräume (24A, 24B, 24C), die durch diese Fächer definiert sind, separiert, wobei das Steuermodul (36) ferner mit Motormitteln (18) verbunden ist und imstande, an die Motormittel (18) ein Steuersignal (84) für das Versenken oder das Zurückzuplatzieren des Separators zu übertragen.

2. Fahrzeug (1) nach Anspruch 1, **dadurch gekennzeichnet, dass** das elektronische Bauteil (56) eine elektronische Uhr (70) umfasst, dass eine Zeitinformation dem einzigen erzeugten numerischen Schlüssel zugeordnet ist und dass das elektronische Bauteil (56) nur während einer vorbestimmten Dauer imstande ist, einen erhaltenen numerischen Schlüssel durch Vergleichen mit dem einzigen erzeugten numerischen Schlüssel zu authentifizieren.

3. Fahrzeug (1) nach Anspruch 1 oder 2, **dadurch gekennzeichnet, dass** das Fahrzeug (1) ein Landfahrzeug ist, das imstande ist, aus der Ferne funkelektrisch gesteuert zu werden.

4. Fahrzeug (1) nach einem der vorangehenden Ansprüche, **dadurch gekennzeichnet, dass** das Fahrzeug (1) ein autonomes Landfahrzeug ist.

5. Fahrzeug (1) nach einem der vorangehenden Ansprüche, **dadurch gekennzeichnet, dass** die elektrischen Versorgungsmittel (58) ein Speicherelement (72) elektrischer Energie und ein Umwandlungselement (74) von Lichtenergie in elektrische Energie wie beispielsweise ein Photovoltaikpanel umfassen, das mit dem Speicherelement (72) elektrischer Energie verbunden ist.

6. Fahrzeug (1) nach einem der vorangehenden Ansprüche, **dadurch gekennzeichnet, dass** das elektronische Schloss (34, 34A, 34B, 34C) ferner elektrische Versorgungsmittel (44) der Motormittel (40) umfasst.

7. Fahrzeug (1) nach Anspruch 6, **dadurch gekennzeichnet, dass** die elektrischen Versorgungsmittel (44) der Motormittel (40) ein Speicherelement (52) elektrischer Energie und ein Umwandlungselement (50) von Lichtenergie in elektrische Energie wie beispielsweise ein Photovoltaikpanel umfassen, das mit dem Speicherelement (52) elektrischer Energie verbunden ist.

8. Fahrzeug (1) nach einem der vorangehenden Ansprüche, **dadurch gekennzeichnet, dass** die Erzeugungsmittel (62) von digitalen Schlüsseln des Steuermoduls (36) imstande sind, wenn der mindestens eine Fächerseparator in einer versenkten Position ist, nur dann einen einzigen numerischen Schlüssel zu erzeugen, wenn der Verschluss aller Klappen, die Zugang zu den beiderseits des oder der Separators (en) ausgebildeten Fächer bilden, ermittelt ist, und dass das elektronische Wiedererkennungsbauteil (56) des Steuermoduls (36) imstande ist, wenn der mindestens eine Fächerseparator in einer versenkten Position ist, infolge der Authentifizierung eines numerischen Schlüssels ein Sollwertsignal gleichzeitiger Deaktivierung für die Motormittel (40) aller elektronischer Schlösser zu erzeugen, die den Klappen zugeordnet sind, die Zugang zu den Fächern bilden, die beiderseits des oder der versenkten Separators(en) ausgebildet sind, für die Entriegelung der Klappen.

9. Fahrzeug (1) nach einem der vorangehenden Ansprüche, **dadurch gekennzeichnet, dass** die mindestens zwei Fächer (10, 10A, 10B, 10C) in einem oder mehreren modulierbaren und lösbaren Boxen gruppiert sind, die am Fahrgestell des Fahrzeugs (1) mit Hilfe von mechanischen oder elektromechanischem Mitteln befestigbar sind.

10. Verfahren zum gleichzeitigen Entriegeln von mindestens zwei Klappen (12A, 12B, 12C) eines fahrerlosen Fahrzeugs (1), wobei das Verfahren von dem Steuermodul (36) eines Fahrzeugs (1) nach Anspruch 8 durchgeführt wird, wobei das Verfahren einen Ausgangsschritt des Sendens eines Steuersignals (68) des Versenkens des mindestens einen Separators (16, 16A, 16B) an die Motormittel (18), die mit dem Separator verbunden sind, umfasst, wobei das Verfahren ferner die folgenden Schritte umfasst:
- das Empfangen, für jede Klappe, die Zugang zu dem Fach bildet, das beiderseits des oder einer der versenkten Separators(en) ausgebildet ist, eines Verschlussdetektionssignals der Klappe;
- das Ermitteln des Empfangs aller Verschlusssignale, die der Gesamtheit der Klappen zugeordnet sind, die Zugang zu den Fächern bilden, die beiderseits des oder der versenkten Separators(en) ausgebildet sind;
- das Erzeugen eines einzigen numerischen Schlüssels;
- das Speichern, innerhalb des elektronischen Wiedererkennungsbauteils, des einzigen erzeugten numerischen Schlüssels;
- das Senden eines Signals (82), welches den einzigen erzeugten numerischen Schlüssel aufweist;
- das Empfangen eines Signals (66), welches einen numerischen Schlüssel aufweist;
- das Authentifizieren, durch das elektronische Wiedererkennungsbauteil (56), des empfangenen numerischen Schlüssels durch Vergleichen mit dem erzeugten numerischen Schlüssel;
- das Senden, über die oder jede betroffene Datenverbindung, eines Sollwertsignals gleichzeitiget Deaktivierung an die Motormittel (40) aller elektronischen Schlösser, die den Klappen zugeordnet sind, die Zugang zu den Fächern bilden, die beiderseits des oder der versenkten Separators(en) angeordnet sind, für die Entriegelung der Klappen.

11. Rechnerprogramm, aufweisend Befehle, welche, wenn von einem Prozessor eines IT-Systems ausgeführt, die Durchführung eines Verfahrens nach Anspruch 10 veranlassen.

## Claims

1. Driverless vehicle (1), comprising:
- at least two compartments (10, 10A, 10B, 10C) each defining an internal space (24A, 24B, 24C) for receiving an object;
- at least two doors (12, 12A, 12B, 12C), each door forming access to a separate compartment from the outside of the vehicle (1), each door being able to close one of said internal spaces (24A, 24B, 24C);
- a device (14) for unlocking each door, the device (14) comprising at least one electronic lock (34, 34A, 34B, 34C) and a control module (36) connected to the electronic lock via a data link (38, 38A, 38B, 38C), the electronic lock comprising drive means (40) able to lock and unlock the door according to the value of an instruction received via the data link, the control module (36) comprising a sensor (54) for a signal (66) comprising a digital key and an electronic recognition component (56) for authenticating the digital key, the sensor (54) being able to transmit the signal (66) to the electronic recognition component (56), said component being connected to the data link and being supplied by electrical supply means (58), the authentication of the digital key by the electronic component (56) generating an instruction for deactivating the drive means (40) for unlocking the door,
wherein the electronic lock comprises means (42) for detecting closure of the door able to send a closure detection signal over the data link, and the control module (36) further comprises means (60) for sending a signal (82) and means (62) for generating digital keys connected to the electrical supply means (58), to the electronic component (56) and to the sending means (60), the generation means (62) being able to generate a digital key unique to each closure of the door, the signal (82) sent comprising the unique digital key generated, the electronic component (56) being able to authenticate the digital key received by comparison with the digital key generated, **characterised in that** the vehicle (1) further comprises at least one retractable compartment separator (16, 16A, 16B) and drive means (18) connected to said separator and able to retract and replace the separator depending on the value of a control signal (84) received, said separator being arranged between two compartments (10A, 10B, 10C) so as to separate in the non-retracted position the respective internal spaces (24A, 24B, 24C) defined by these compartments, the control module (36) further being connected to the drive means (18) and being able to transmit a control signal (84) to the drive means (18) for the retraction or replacement of the separator.

2. Vehicle (1) according to claim 1, **characterised in that** the electronic component (56) comprises an electronic clock (70), **in that** timestamping information is associated with the unique digital key generated and **in that** the electronic component (56) is able to authenticate a digital key received by comparison with the unique digital key generated only for a predetermined period.

3. Vehicle (1) according to claim 1 or claim 2, **characterised in that** the vehicle (1) is a land vehicle able to be remote controlled by radio.

4. Vehicle (1) according to any of the preceding claims, **characterised in that** the vehicle (1) is an autonomous land vehicle.

5. Vehicle (1) according to any of the preceding claims, **characterised in that** the electrical supply means (58) comprise an electrical energy storage element (72) and an element (74) for converting light energy into electrical energy, such as for example a photovoltaic panel, connected to the electrical energy storage element (72).

6. Vehicle (1) according to any of the preceding claims, **characterised in that** the electronic lock (34, 34A, 34B, 34C) further comprises means (44) for electrically supplying the drive means (40).

7. Vehicle (1) according to claim 6, **characterised in that** the means (44) for electrically supplying the drive means (40) comprise an electrical energy storage element (52) and an element (50) for converting light energy into electrical energy, such as for example a photovoltaic panel, connected to the electrical energy storage element (52).

8. Vehicle (1) according to any of the preceding claims, **characterised in that** the means (62) for generating digital keys of the control module (36) are, when said at least one compartment separator is in a retracted position, able to generate a unique digital key only when closure of all the doors that form access to the compartments arranged on either side of said retracted separator or separators is detected; and **in that** the electronic recognition component (56) of the control module (36) is, when said at least one compartment separator is in the retracted position, able, following the authentication of a digital key, to generate a signal instructing simultaneous deactivation intended for the drive means (40) of all the electronic locks associated with the doors that form access to the compartments arranged on either side of said retracted separator or separators, for unlocking said doors.

9. Vehicle (1) according to any of the preceding claims, **characterised in that** the at least two compartments (10, 10A, 10B, 10C) are grouped in one or more modular removable chests, able to be fixed to the chassis of said vehicle (1) by the mechanical or electromechanical means.

10. Method for the simultaneous unlocking of at least two doors (12A, 12B, 12C) of a driverless vehicle (1), the method being implemented by the control module (36) of a vehicle (1) according to claim 8, the method comprising an initial step of sending a control signal (68) for retracting said at least one separator (16, 16A, 16B), to the drive means (18) connected to said separator, the method further comprising the following steps:
- reception, for each door forming access to the compartment arranged on either side of said or one of said retracted separators, of a signal detecting closure of the door;
- detection of the reception of all the closure signals associated with all the doors that form access to the compartments arranged on either side of said retracted separator or separators;
- generation of a unique digital key;
- storage, in the electronic recognition component, of the unique digital key generated;
- sending of a signal (82) that comprises the unique digital key generated;
- reception of a signal (66) that comprises a digital key;
- authentication, by the electronic recognition component (56), of the digital key received by comparison with the digital key generated;
- sending, over the or each data link concerned, of a simultaneous deactivation instruction signal intended for the drive means (40) of all the electronic locks associated the doors that form access to the compartments arranged on either side of said retracted separator or separators, for unlocking said doors.

11. Computer program, containing instructions which, when executed by a processor of a computer system, cause the implementation of a method according to claim 10.
